# EUROPEAN PATENT APPLICATION

(11) **EP 4 230 058 A1**
(43) Date of publication of application: **23.08.2023**
(21) Application number: 21836218.4
(22) Date of filing: 25.11.2021
(51) Int. Cl.: A23L 7/109, A23L 3/36, A23L 29/212, B65D 85/00, B65D 81/34

(54) **METHOD FOR PREPARING A FROZEN PASTA OR RICE BASED FOOD PRODUCT AND PRODUCT PREPARED**

(30) Priority: 25.11.2020 ES 202031184
(71) Applicant: Letizia, Renato, 08006 Barcelona (ES); Pettirossi, Loredana, 08006 Barcelona (ES)
(72) Inventor: Letizia, Renato, 08006 Barcelona (ES); Pettirossi, Loredana, 08006 Barcelona (ES)
(74) Representative: Araujo, Daniel
(86) International application number: PCT/ES2021/070848
(87) International publication number: WO 2022/112637

(57) **Abstract**

The present invention relates to a method for preparing a pasta- or rice-based frozen food product; which comprises, cooking and freezing pasta or rice in servings, obtaining starchy water from cooking pasta or rice, or from dissolving starch in water and, optionally, preparing and freezing a sauce in portions; and introducing in one or more containers: a frozen serving of cooked pasta or rice, frozen cubes of starchy water and optionally frozen portions of sauce; in predetermined proportions by weight. The invention also includes the frozen food product.

## Description

### Technical field

The present invention is related to a method for preparing a frozen food product as well as to the product obtained, said invention being applicable in the sector dedicated to preparing precooked and frozen meals, and more specifically foods based on a product with a high starch content, such as pasta or rice.

The product of the invention comprises pasta, risotto (varieties of rice-based dishes) or stuffed pasta, and additionally comprises additional ingredients such as sauces and/or seasoning elements according to recipes mainly from the Italian gastronomic tradition, but that can be used for preparing any pasta recipe.

### Prior state of the art

Document JP2005287505 A2 aims to provide a packaged frozen food for a cooled noodle food. Packaged frozen foods include a frozen product (A) which can be a sauce, a frozen product (B) which is the boiled noodle food, and two or more small pieces of ice (ice cubes), in a main container (X) that is heat-resistant and waterproof.

The frozen product also includes, optionally, a frozen product (C) of spices and/or ingredients stored in a sub-container (Y). The frozen product is made by placing the sauce (A) on top of the frozen noodles, fixing the small pieces of ice at least in one position inside, and placing the optional sub-container (Y), next to the frozen product (A) (sauce), in the main container (X).

Document JP2002360199 A2 raises the problem of how to provide a packaged frozen cold noodle capable of being eaten with a taste close to the freshly boiled noodle, easily being eaten without having to discard hot water and being eaten as a low-temperature cold noodle. The proposed solution is as follows: the packed noodle is obtained by enclosing a frozen noodle 2 and a frozen soup 3 in a container 10. Said frozen soup can be or comprise a sauce. In addition, D2 describes that an additional large ice plate (frozen water) can preferably be enclosed in the container to adjust the concentration of the soup/sauce and reduce the temperature of the noodles.

Document IT994517 B includes a pasta food product in a vacuum-sealed package and is precooked to approximately 2/3 of the required total cooking time. The package is preferably a bag, but alternatively it can be a rigid container. The product is stored in a frozen state and the package contains a piece of ice, inserted immediately before sealing the package, after inserting the pasta. Furthermore, the package optionally includes a dose of frozen sauce in the shape of a cube. Lastly, the pasta is cooked by immersing the package in boiling water for the rest of the time necessary to fully cook the contents. Ice ensures that the contents are satisfactorily cooked, that the texture is sufficiently moist, and that moisture is evenly distributed.

Said background describes a frozen product comprising a container containing: frozen pasta, frozen sauce and at least one ice portion/piece, wherein said three ingredients have been frozen separately, so that they are not extensively mixed with each other inside the container, at least until the container is heated.

Thawing the product for consumption thereof causes the ice to melt, the thawed water causing a "washing" effect of the pasta, so that the dish does not present the texture, nor the taste, of a plate of pasta prepared on the spot.

Other known documents such as: US2768086 A, JP7194326 A2 or JP10001173 A2 describe food products comprising frozen pasta or rice and frozen sauce, but they do not contemplate the possibility that the product comprises frozen water or another additional hydrating product.

It is also worth mentioning that the ingredients of any dish must be cooked separately so that they can acquire their own personality, flavour and cuisine. They should only be combined at the final cooking stage of the dish to ensure maximum quality.

This process, however, is altered in the technological processes of industrial production for preparing frozen pasta. Sauce and all seasonings are usually added to the pasta before the freeze cycle. In this way the already finished dish is frozen.

A large part of the industrial products available today undergo this production process that does not respect the traditional process for preparing the dish. The end result of the alteration of the artisan process, affects the lower organoleptic quality of frozen pre-cooked dishes.

Therefore, the technical problem that arises is how to prepare a frozen food product, pasta- or rice-based, of high quality level, that presents the same texture and organoleptic properties as a freshly prepared dish once thawed for consumption thereof.

### Description of the invention

The method for preparing a frozen food product object of the invention, has technical features that enable the technical problem raised to be solved in a satisfactory manner.

The method for preparing a frozen food product, particularly a pasta- or rice-based food product, object of the invention, comprises the following steps:
a) cooking the pasta or rice in water;
b) draining the pre-cooked pasta or rice, and freezing the pasta in portions of predetermined weights,
c) obtaining starchy water from cooking the pasta or rice in step a), or from the separate cooking of a pasta or rice respectively, or from dissolving starch in water;
d) freezing the starchy water in cubes;
e) optionally, preparing a specific dressing or sauce for the type of food product to be prepared, and freezing thereof in portions;
f) introducing in one or more containers a frozen serving of cooked pasta or rice, frozen cubes of starchy water and optionally frozen portions of sauce; in predetermined proportions by weight and,
g) preserving the frozen ingredients housed in the one or more containers, at a controlled freezing temperature until the moment of heating and consumption thereof.

Preferably, the one or more containers may be suitable for freezing and heating. When it comes to heating, the one or more containers may be suitable for heating in a microwave, or in an oven, or in a frying pan or others. In the case of heating in a microwave oven, it is contemplated that the material of the one or more containers can be of different types, such as silicon, glass, cardboard, ceramic, different microwave-safe polymers (such as high-density polyethylene, polycarbonate, polymethyl methacrylate, polypropylene or others). In the case of heating in an oven, it is contemplated that the material of the one or more containers can be of different types, such as metals (such as stainless steel, aluminium, iron or others), glass, ceramic, stone, porcelain, silicone and others. In the case of heating in a frying pan, it is contemplated that the material of one or more containers can be of different types, such as metals (such as stainless steel, aluminium, iron or others), glass, ceramic, silicone or others. It should be noted that frozen pasta or rice servings should not necessarily be construed as individual servings, since they can include an amount of pasta or rice suitable for preparing two or more individual servings; in any case the weights of the frozen ingredients (pasta/rice, starchy water, and sauce) being required to maintain certain proportions.

An essential feature of the invention is the use and freezing in cubes of starchy water from the cooking of pasta/rice, from dissolving starch in water, or from the separate cooking of pasta or rice, and the incorporation of said frozen cubes of starchy water with the rest of the ingredients inside the container, so that it is the starchy water that hydrates the pasta/rice at the time of thawing, for example in a microwave oven, and prior to the consumption thereof. Preferably, when using water from the separate cooking of pasta or rice, the pasta or rice are of the same type as the pasta or rice used for preparing the frozen food product.

Obtaining the starchy water described in step c) can come from cooking the pasta or rice in step a), or from separately cooking a pasta or rice of the same type, or from dissolving starch in water. In the event that obtaining starchy water is performed by means of preparing a solution of starch in water, this can be prepared by dissolving powdered starch in water. In other words, obtaining starchy water can come from dissolving powdered starch in water. The solution of powdered starch in water can be prepared at the time of carrying out the method or be a previously prepared solution. Obtaining starchy water can come from dissolving starch in water, wherein the concentration of the starch in the water may correspond to the concentration obtained by cooking the pasta or rice from step a). By the latter it is understood that the concentration of starch in the solution can be the same or similar to that obtained by cooking the pasta or rice in step a), in other words, that said concentration can provide the flavour and texture that would be obtained using the starchy water of the pasta or rice to be frozen. However, the concentration of the starch in the solution can be optimised according to the flavour and texture to be obtained, said concentration being able to be higher or lower than that obtained by cooking the pasta to be frozen.

This feature has the technical effect of ensuring that the flavour and texture of the dish prepared by heating the frozen product are the same as those of dishes prepared according to the classic/traditional manner, precisely due to the presence of starch, which avoids the "washing" effect of the pasta or rice with the water without starch, starchy water acting as a binder, giving the thawed product a texture, taste and organoleptic properties equal to those of a dish that has been freshly prepared in a traditional manner.

This method enables all the ingredients of the various recipes to be prepared separately, and to mix them at the final moment of preparing the dish, immediately before consumption thereof. It also guarantees the preservation of the organoleptic features of each ingredient, and an organoleptic expression of the reconstituted dish that is far superior to the standard of currently existing frozen products, to the point of causing the difference between a high-end dish prepared on the spot and one frozen according to the method of the invention not to be recognisable.

As specified in steps e) and f) of the method, the preparation, freezing and incorporation into the container of the sauce frozen in portions is optional, as this sauce could be incorporated into the product formed by the pasta/rice and the starchy water once thawed and heated, prior to consumption thereof.

This invention also includes the frozen food product obtained by the method described above and comprising inside one or more containers: a frozen portion of cooked pasta or rice, and frozen cubes of starchy water from cooking pasta or rice respectively or from dissolving starch in water.

In one embodiment, the one or more containers may be suitable for freezing and heating. Preferably, the one or more containers may be suitable for freezing and heating. When it comes to heating, the one or more containers may be suitable for heating in a microwave, or in an oven, or in a frying pan or others. In the case of heating in a microwave oven, it is contemplated that the material of the one or more containers can be of different types, such as silicon, glass, cardboard, ceramic, different microwave-safe polymers (such as high-density polyethylene, polycarbonate, polymethyl methacrylate, polypropylene or others). In the case of heating in an oven, it is contemplated that the material of the one or more containers can be of different types, such as metals (such as stainless steel, aluminium, iron or others), glass, ceramic, stone, porcelain, silicone and others. In the case of heating in a frying pan, it is contemplated that the material of one or more containers can be of different types, such as metals (such as stainless steel, aluminium, iron or others), glass, ceramic, silicone or others.

In another embodiment, the frozen cubes of starchy water, and the pasta or rice are in the same container.

In another embodiment, the frozen cubes of starchy water are in a container, and the pasta or rice is in another container.

In another embodiment, the product comprises a sauce that is in a container with the frozen cubes of starchy water and/or with the pasta and/or with the rice.

In another embodiment, the frozen cubes of starchy water, and the pasta or rice are in a container, and the sauce is in another container.

In another embodiment there are two containers, the pasta or rice and frozen cubes of starchy water are in one of them, and the sauce or other food ingredients are in the other, and said two containers are attached to each other.

Preferably, said two containers and/or the attachment thereof are configured so that the containers can be separated without compromising the capacity of each container to contain the product or food products included therein.

Preferably, when they are attached, the two containers are initially put together in a microwave oven to heat up for a first period of time, for example 1 minute, and then the two containers are separated from each other, and the container with the starchy water cubes and the pasta or rice, or the container with the sauce, is put back in the microwave oven for a second period of time, e.g. 1.5 min, for further heating. Similarly, they can be heated in an oven or in a frying pan.

Any container can be configured to be stirred in order to mix or homogenise or properly distribute on the inside the food products contained in the container.

In one embodiment of the invention, this frozen food product additionally comprises frozen portions of a sauce suitable for the type of food to be prepared inside the container.

Advantageously, the frozen cubes of starchy water and/or the frozen portions of sauce are located inside the container, on the frozen portion of cooked pasta or rice, thus ensuring that they thaw on the pasta, and are mixed therewith.

Preferably, the frozen portion of cooked pasta or rice included in the frozen food product has a weight comprised between 70 and 130 grams; the frozen cubes of starchy water between 5 and 40 grams, and preferably the optional frozen portions of sauce between 50 and 150 grams.

Preferably, each frozen starchy water cube weighs between 3 and 50 grams, even more preferably between 5 and 40 grams. Advantageously, the size of said frozen cubes is suitable so that during the preparation of the dish the cubes can be heated and mixed properly with the pasta or rice, offering the required amount of starchy water.

Preferably the frozen food product, for each individual serving, comprises: a frozen serving of cooked pasta or rice, and between 1 and 3 frozen cubes of starchy water. Likewise, preferably the frozen food product, for each individual serving, additionally comprises between 2 and 4 frozen servings of sauce.

### Brief description of the content of the drawings

To complement the description that is being made and for the purpose of helping to facilitate the understanding of the features of the invention, a set of drawings is attached to the present specification in which, for illustrative and non-limiting purposes, the following has been represented:
- Figure 1 shows a schematic top plan view of an exemplary embodiment of a pasta-based frozen food product, prepared according to the method of the invention, incorporating frozen cooked rice or pasta, the frozen cubes of starchy water and a frozen sauce in the same container.
- Figure 2 shows a top plan view of a first variant embodiment of the food product, wherein the frozen cooked rice or pasta and the starchy water cubes are housed in a first container and the frozen sauce in a second independent container.
- Figure 3a shows a top plan view of a second variant embodiment of the frozen food product, wherein the frozen cooked rice or pasta and the starchy water cubes are housed in a first container and the frozen sauce in a second container which, initially, is attached to the first container forming a pack provided with a break line for the separation of both containers.
- Figure 3b shows a top plan view of the frozen food product of Figure 3a, once the two containers have been separated by the break line.

### Detailed explanation of embodiments of the invention

In an exemplary embodiment, the method of the invention is used for preparing a pasta- or rice-based frozen food product, in this specific case spaghetti with tomato and basil sauce.

The pasta is initially cooked in salted water for the time indicated by the pasta manufacturer.

Once the cooking is finished, the pasta is drained and placed in a food box, adding extra virgin olive oil, sunflower oil or similar, and later it is extended so that it cools down.

Once cooled, a serving of cooked pasta in the established amount is put in a container, it is placed in a blast chiller until the end of the freezing process and it is stored in a freezing chamber.

Starchy water from pasta cooking is prepared, left to cool, introduced into moulds forming cubes and placed in the blast chiller until the freezing process is complete; subsequently, the frozen cubes of starchy water are stored in the freezing chamber.

The starchy water can be obtained from the cooking of the pasta to be frozen, or preferably from a separate cooking of a pasta of the same or different type. From said separate cooking, parameters that can be controlled to optimise the obtained starchy water are temperature, and/or the time and/or the amount of pasta in the water. Likewise, starchy water can be obtained from the preparation of a solution of starch in water, which is preferably prepared with powdered starch. The concentration of starch in water can correspond to the concentration obtained from the cooking of the pasta to be frozen. It is also contemplated that the concentration of starch in the solution may be lower or higher according to the texture and flavour result to be obtained. Likewise, in the case that a solution of starch in water is used, it is contemplated that said starch may be one of the types used in the food sector, such as wheat, corn, potato, yucca, tapioca starch, starch obtained by processing a vegetable product, or another type.

In a specific example, to obtain starchy water by means of the separate cooking of pasta, salted water is put in a pot, with the water still cold, durum wheat pasta is added; the flame is set to the maximum and when the water begins to boil the flame is reduced to the minimum. Once the pasta has been cooked for between 20 and 45 minutes, the water with the pasta is allowed to cool completely. Next, the pasta is removed from the pot, the water with the starch is poured into moulds, and said moulds are introduced into the blast chiller until the freezing process is finished and the frozen cubes of starchy water are obtained.

A sauce is prepared separately, in this case tomato and basil sauce, and it is placed in moulds to form portions of sauce that are put in a blast chiller until the freezing process is finished; and finally the frozen portions of sauce are stored in the freezing chamber.

Finally, the frozen food product is prepared by placing in a suitable container for freezing and for microwave cooking: a frozen portion of cooked pasta, frozen cubes of starchy water, and frozen portions of tomato and basil sauce, in predetermined proportions by weight; finally the container is closed and stored in the freezer until the moment of use thereof. Likewise, it is also contemplated that the container may be suitable for oven or frying pan.

In the present embodiment, the preparation of the frozen product for consumption will be carried out in a microwave oven, according to the instructions of the product manufacturer, being sufficient to insert the container directly into the microwave for a time of 2 min. to 10 min. depending on the power of the microwave; halfway through cooking, the container is stirred and cooking is finished, stirring the container vigorously again before serving on the plate. Similarly, it is contemplated that the preparation of the frozen product for consumption thereof is carried out in an oven or frying pan.

The stirring that is carried out guarantees the activation of the starch, adding creaminess to the dish, just as a fresh pasta is prepared and salted.

In addition, the tomato sauce placed separately does not alter the cooking and the consistency of the pasta which, if it were seasoned before freezing, would absorb the liquids of the sauce itself, altering the consistency thereof and the perfect cooking texture.

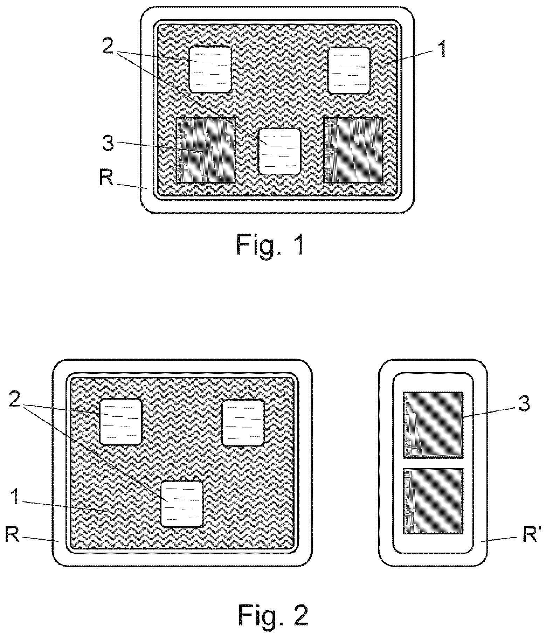

Figure 1 shows an example of the frozen food product of the invention, comprising inside the same container (R), suitable for freezing and heating in a microwave oven, a frozen serving of cooked rice or pasta (1), and frozen cubes of starchy water (2) and frozen portions of sauce (3) on top, for example, tomato with basil. Likewise, it is also contemplated that the container may be suitable for oven or frying pan.

In this specific example, the frozen food product of the invention comprises inside the container: a frozen portion of cooked rice or pasta (1) of about 100 grams; about 50 grams of frozen cubes of starchy water (2), and about 225 grams of frozen servings (3) of tomato and basil sauce.

Figure 2 schematically shows a plan view of a variant embodiment of the food product, according to the invention, wherein the frozen portion of cooked rice or pasta (1) and the frozen cubes of water with starch (2) are housed in a first container (R), and the frozen portions of sauce (3) are housed in a second independent container (R').

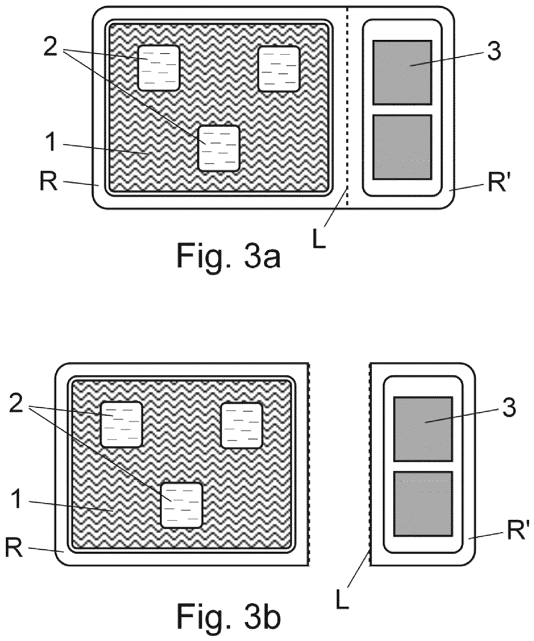

Figure 3a shows a second embodiment of the food product wherein: the container (R) containing the frozen serving of cooked rice or pasta (1) and the frozen cubes of starchy water (2), and the container (R') containing the frozen portions of sauce (3), are initially attached forming a pack provided with a break line (L) for the separation thereof, as shown in Figure 3b.

In this case, the pack with the two containers (R, R') attached allows an initial heating of the ingredients included in both containers and later the separation of said containers (R, R') along the break line "L" to further heat the ingredients contained in the container (R), avoiding unnecessary overheating of the sauce contained in the container (R').

Having sufficiently described the nature of the invention, in addition to a preferred exemplary embodiment, it is hereby stated for the relevant purposes that the materials, shape, size and arrangement of the described elements may be modified, provided that it does not imply altering the essential features of the invention claimed below.

## Claims

1. A method for preparing a frozen food product, particularly a pasta- or rice-based food product; **characterised in that** it comprises the following steps:
a) cooking the pasta or rice in water;
b) draining the cooked pasta or rice, and freezing it in portions of predetermined weights,
c) obtaining starchy water from cooking the pasta or rice in step a), or from the separate cooking of pasta or rice respectively, or from dissolving starch in water;
d) freezing the starchy water in cubes;
e) optionally, preparing a specific sauce for the food to be prepared, and freezing thereof in portions;
f) introducing in one or more containers a frozen serving of cooked pasta or rice, frozen cubes of starchy water and optionally frozen portions of sauce; in predetermined proportions by weight and,
g) preserving the frozen ingredients housed in the one or more containers, at a controlled freezing temperature until the moment of heating and consumption thereof.

2. The method for preparing a frozen food product according to claim 1, **characterised in that** the starchy water is obtained from dissolving powdered starch in water.

3. The method for preparing a frozen food product according to any one of the preceding claims, **characterised in that** the starchy water is obtained from dissolving starch in water, wherein the concentration of the starch in the water corresponds to the concentration obtained by cooking the pasta or rice from step a).

4. The method for preparing a frozen food product according to any one of the preceding claims, **characterised in that** the one or more containers are suitable for freezing and heating, preferably suitable for heating in a microwave oven, or in an oven, or in a frying pan.

5. A frozen food product; **characterised in that** it comprises inside one or more containers (R, R') a frozen portion of cooked pasta or rice (1), and frozen cubes of starchy water (2) from cooking pasta or rice respectively or from dissolving starch in water.

6. The frozen food product, according to claim 5, **characterised in that** the one or more containers (R, R') are suitable for freezing and heating, preferably suitable for heating in a microwave oven, or in an oven, or in a frying pan.

7. The frozen food product, according to claims 5 or 6, **characterised in that** it additionally comprises inside the one or more containers (R, R') frozen portions of a sauce (3) suitable for the type of food to be prepared.

8. The frozen food product, according to claim 7, **characterised in that** the frozen cubes of starchy water (2) and/or the frozen portions of sauce (3) are located inside the one or more containers (R, R'), on the frozen portion of cooked pasta or rice (3).

9. The frozen food product, according to any one of claims 5-8, **characterised in that** the frozen portion of cooked pasta or rice (1) included in the frozen food product has a weight comprised between 70 and 130 grams, the frozen cubes of starchy water (2) between 3 and 50 grams, and preferably when the product additionally comprises inside the one or more containers (R, R') frozen portions of a sauce (3) suitable for the type of food to be prepared, said frozen portions of sauce (3) weigh between 50 and 150 grams.

10. The frozen food product, according to any one of claims 5-9; **characterised in that** it comprises inside the one or more containers (R, R') a frozen portion of cooked pasta or rice (1), between 1 and 3 frozen cubes of starchy water (2), and preferably between 2 and 4 frozen portions of sauce (3).

11. The frozen food product, according to any one of claims 5-10; **characterised in that** the frozen portion of cooked pasta or rice (1), the frozen cubes of starchy water (2), and preferably the frozen portions of sauce (3) when the product comprises said frozen portions of sauce, are housed inside the same container (R).

12. The frozen food product, according to claim 6; **characterised in that** the frozen portion of cooked pasta or rice (1) and the frozen cubes of starchy water (2) are housed inside one container (R) and the frozen portions of sauce (3) inside another container (R').

13. The frozen food product, according to claim 12, **characterised in that** the containers (R, R') are initially attached forming a pack provided with a break line for the separation thereof.
